# EUROPEAN PATENT SPECIFICATION

(11) **EP 1 405 519 B1**
(45) Date of publication and mention of the grant of the patent: **09.08.2006**
(21) Application number: 02738169.8
(22) Date of filing: 17.06.2002
(51) Int. Cl.: H04N 7/24, G06T 1/00

(54) **VIDEO/IMAGE COMMUNICATION WITH WATERMARKING**
VIDEO-/BILDKOMMUNIKATION MIT WASSERZEICHEN
TRANSMISSION D'IMAGES (VIDEO) A FILIGRANE NUMERIQUE

(30) Priority: 28.06.2001 GB 0115849
(43) Date of publication of application: 07.04.2004
(73) Proprietor: MOTOROLA, INC., Schaumburg, IL 60196 (US)
(72) Inventor: HARE, Jonathan, Stephen, Tadley, Hampshire RG26 3UA (GB); HOBSON, Paola, Marcella, Alton, Hampshire GU34 2SQ (GB)
(74) Representative: Cross, Rupert Edward Blount
(86) International application number: PCT/EP2002/006670
(87) International publication number: WO 2003/003744

(56) References cited:
- EP-A- 0 953 938
- WO-A-00/64094
- WO-A-99/11020
- MOBASSERI B G: "ORDERED BITPLANE WATERMARKING OF DIGITAL VIDEO BY DIRECT SEQUENCE SPREAD SPECTRUM" PROCEEDINGS OF INTERNATIONAL WORKSHOP ON MULTIMEDIA DATABASE MANAGEMENT, XX, XX, 5 August 1998 (1998-08-05), pages 66-71,ABSTRACT, XP000953697
- HARTUNG F ET AL: "Digital watermarking of MPEG-2 coded video in the bitstream domain" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21 April 1997 (1997-04-21), pages 2621-2624, XP010225693 ISBN: 0-8186-7919-0

## Description

### Field of the Invention

This invention relates to video transmission systems and related video encoding/decoding techniques. The invention is applicable to, but not limited to, a video compression system employing video watermarking where any tampering of a video image or portion of video image is to be detected.

### Background of the Invention

The ability to transmit real-time video and/or image data is a desirable characteristic of many current wireline and wireless communication systems. However, it is known that individual images/pictures, or a series of images say, in a transmitted video stream, may be subjected to 'attacks', i.e. the images may have been tampered with. Therefore, a need exists to protect image or video transmissions from such undesirable tampering. One known technique employed to protect still/video images or documents is by the use of "watermarks".

In the context of the present invention, the terms 'video' and 'image' are used interchangeably, with the term 'video' generally used to represent one or more still images.

Wolfgang R, Podilchuk C, Delp E "Perceptual watermarks for digital images and video", SPIE Conference on Security and Watermarking of Multimedia Content, January 1999, describes some state of the art watermarking methods for use with video and images.

Protection of digital media (including image and video) has also become a key standardisation topic within the multimedia industry over the last year. Police users have formally stated that they do not envisage using digitally transmitted and processed images for evidential purposes without the existence of reliable tamper detection methods.

The European Broadcasting Union has issued a second call for systems that offer watermarking of multimedia transmissions for entertainment applications. In addition, the International Standards Organisation (ISO) has set up a working group known as MPEG-21, whose essential function is to investigate digital rights management including the authentication of multimedia data.

In image watermarking, a known binary pattern or signature is embedded into an image at the moment of image acquisition. Such watermarks are termed "robust", because they are designed to remain intact regardless of any post-processing of the image such as filtering, cropping, etc.

While such watermarks do provide a useful degree of protection, they cannot at present be wholly relied on in a court of law. The purpose of these watermarking methods is such that they are not designed to possess the required degree of surety that an image has not been tampered with, in order for the image to be used as evidence.

Thus, there exists a need in the field of the present invention to provide a video communication unit and methods, based on a watermarking system, that can be used for testing a video sequence for evidence of tampering, wherein the abovementioned disadvantages may be alleviated.
Furthermore, there exists a need for a labelling method to highlight areas of a video sequence that are detected as having been tampered with. Additionally, it would be beneficial to visually label tampered video sequences such that they are rendered unusable, or valueless, to the attacker.

Published prior art documents include:
(i) US-A-5875249 (Mintzer et al.);
(ii) 'Digital watermarking through quasi m-arrays', YEH et al., IEEE conference proceedings 29 November 1999, pages 459-461;
(iii) 'A digital watermark', OSBORNE et al., IEEE conference proceedings 13-16 November 1994, pages 86-90.

An article by Mobasseri B G, entitled 'Ordered Bitplane Watermarking of Digital Video by Direct Sequence Spread Spectrum', published on 5 August 1998 in Proceedings of International Workshop on Multimedia Database Management, pages 66-71, abstract, XP000953697, discloses a method of watermarking video by direct watermarking of the spatial domain bit planes with each image making up the video signal by embedding a watermark signal into an image bit plane.

PCT patent application no. WO 00/64094 discloses a method for selection of bits for watermarking and insertion of a digital signature into those bits.

### Statement of Invention

The present invention provides video communication units, a video transmission system adapted to use one of the video communication units, a mobile radio device, a method of watermarking a video signal transmission in a video transmission system, a method of detecting tampering of a watermarked digital image, a storage medium having stored thereon processor-implementable instructions for controlling a processor to carry out any of the methods of the invention, a video communication unit adapted to perform any of the methods of the invention, a mobile radio device, all as claimed in the appended independent claims.

### Brief Description of the Drawings

Exemplary embodiments of the present invention will now be described, with reference to the accompanying drawings, in which:
FIG. 1 shows a watermark embedding method, in accordance with the preferred embodiment of the invention.
FIG. 2 shows a method of detecting frames that have been tampered with, in accordance with the preferred embodiment of the invention.
FIG. 3 shows a flowchart of a decision process for determining whether tampering has occurred, in accordance with the preferred embodiment of the invention.
FIG. 4 shows a block diagram of a video communication system incorporating a communication unit embedding a watermark, and a communication unit detecting a watermark, in accordance with the preferred embodiment of the invention.

### Description of Preferred Embodiments

The inventive concepts described herein find particular application in the current MPEG Standards activities, where a standard watermarking system for video use is to be defined. The detection of tampering, and the ability to determine what type of tampering has taken place, are necessary steps in ensuring user confidence in the images and video sequences a user is viewing in a potentially hostile multimedia communication environment.

In summary, the preferred embodiment of this invention aims to pre-process video material such that detection of tampering can take place.

Most current image and video watermark methods focus on pre-processing video and images such that any embedded watermark can be recovered, regardless of tampering, for example in copyright applications. The method described below, however, provides for 'fragile' watermarks that are destroyed when the images are altered.

Furthermore, the method makes clear that content has been tampered with such that the person carrying out the unauthorised processing realises that their actions are evident. As a consequence, they cannot re-sell or distribute the video as an "original".

As an example, let us consider a person making "pirated" video files for unauthorised distribution via an internet web site. The preferred method, as described below, identifies where the video had been tampered with (e.g. in reformatting the video for web distribution) and applies a label to the tampered area, thereby rendering the video unsuitable for onward distribution.

The preferred embodiment of the present invention can be applied to video sequences consisting of at least two image frames. Furthermore, the preferred embodiment of the present invention can be applied to image formats including YC_{b}Cᵣ (a standard representation of a colour image as specified in ITU Rec 601), red/green/blue (RGB), or any single component (e.g. Y only) of an image format consisting of more than one component. Advantageously, the preferred embodiment of the present invention can also be applied in a restricted area or region of an image, or throughout the entire image.

The watermark arrangement of the preferred embodiment of the invention clearly shows when tampering has occurred, as tamper evident information is embedded into the video data stream. In summary, the method facilitates replication of bit planes in consecutive frames.

Furthermore, the method allows the video player to locate the exact spatial and temporal position of the tampering as the video is being played.

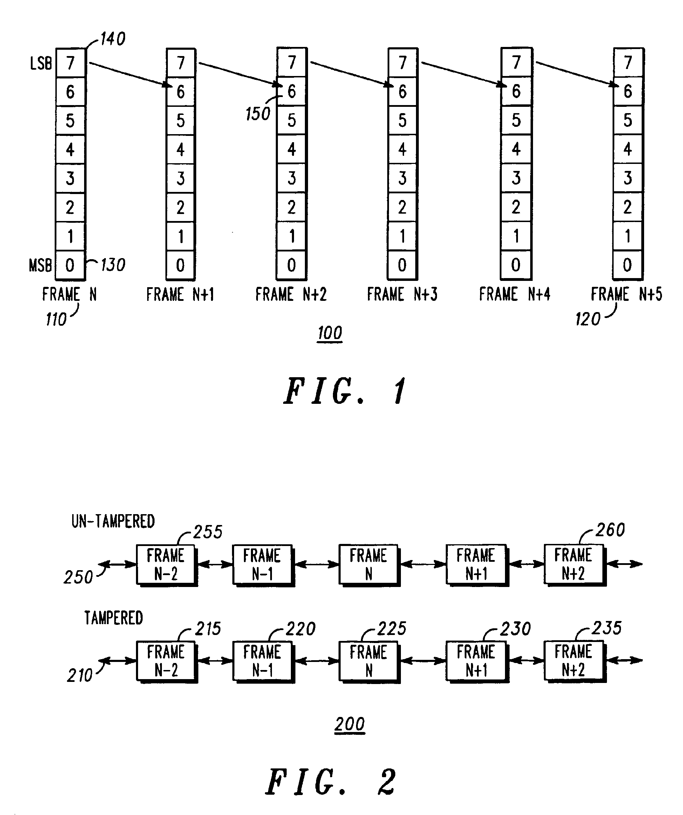

Referring first to FIG. 1, a watermarking method 100 is shown, in accordance with the preferred embodiment of the invention. The watermarking method 100 includes a sequence of video/image frames - frame 'N' 110 to frame 'N+5' 120. Six frames are shown for clarity purposes only. Each video/image frame includes a number of data bits, ranging from a most significant bit plane (MSB) - 'bit 0' 130 to a least significant bit plane (LSB) - 'bit 7' 140. Again, each frame is shown as having eight bit planes for clarity purposes only.

The usual representation of image data is as a series of pixels, located as rows and columns of an image. Common image formats include representation of each pixel in a number of bits, from 6 to 12 bits per component of the image. As an example, each single component (R, G or B) of a colour image may have 8 bits per pixel, an infrared image may have 12 bits per pixel represented as a luminance component.

A "bit plane" representation is the term given to the collection of individual bits at any one-bit position of a pixel across the entire image. As an example, consider an image or image region of size k columns and j rows, with 'N' bits per pixel. Each of the (k*j) pixels has 'N' bits, which are ordered from a least significant bit (LSB) usually termed bit 'N-1', up to a most significant bit (MSB) termed bit 0.

A bit plane is a representation of the collection of (k*j) bits considered at one bit position P, where 0<=P<=(N-1). Thus the expression "the most significant bit plane" means that we consider the collection of all bit 0's of all (k*j) pixels in an image or image region. For an image comprising 'N' bits per pixel, there will be 'N' bit planes.

It is within the contemplation of the invention that a video/image transmission system having any number of frames in a sequence of video/image frames, including any number of bit planes more than two, would benefit from the inventive concepts described herein.

In the preferred embodiment of the invention, a 7th bit plane (the LSB) 140 of a previous frame is moved into a 6th bit plane 150 of a current frame, assuming an 8 bit per pixel image component, which is a common image format. Clearly, it is not essential that the bit plane be moved to the next least important bit-plane. However, the more important the bit plane that is replaced, the larger the adverse affect on the quality of the video transmission.

The 7th bit plane (the least significant bit-plane) 140 from the previous frame is placed in the 6th bit plane 150 of the current frame on a pixel-by-pixel basis. This process repeats throughout the sequence, as illustrated in FIG. 1.

As the 6th and 7th bit planes contain the least significant portions of the video/image data, they can be viewed as essentially noise. Such noise is imperceptible to the human visual system. Thus, the inventors of the present invention have recognised the benefits of using such 'noise' as a form of tamper detection, in utilising the replication of bit planes without producing any noticeable artefacts in the image. As the 7th (LSB) bit plane 140 is used, very small alterations in the pixel values of the frame (±1) allow any tampering to be detected.

It is noteworthy that for improved robustness to attack and reduced disturbance to the original image, a subset of pixels in a frame may be chosen for this process, in contrast to using the entire video/image frame.

Referring next to FIG. 2, a method 200 of detecting which frame has been tampered with is shown, in accordance with the preferred embodiment of the invention.

FIG. 2 shows two video/image sequences:
(i) an un-tampered sequence of frames 250, from a frame 'N-2' 255 to a frame 'N+2' 260; and
(ii) a tampered sequence of frames 210, from a frame 'N-2' 215 to a frame 'N+2' 235.

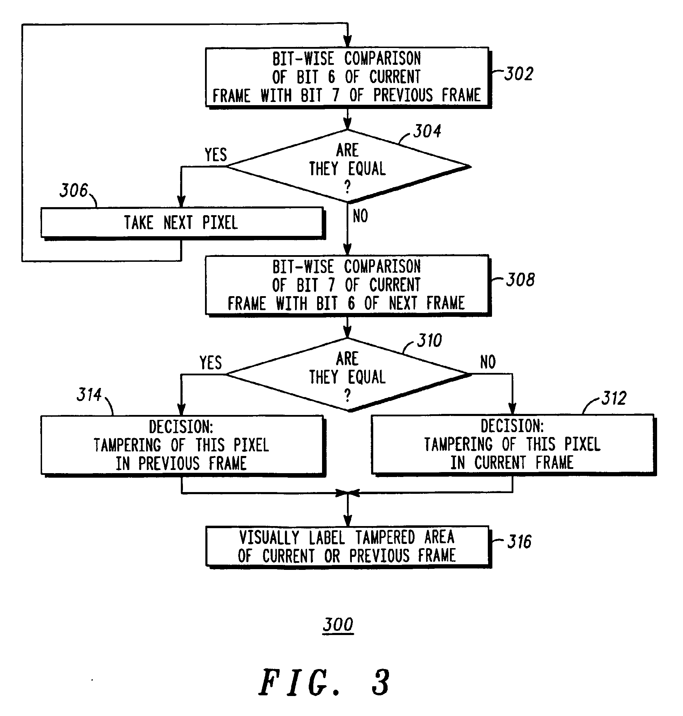

Frame 'N' 225 is shown as having being tampered with. In order for the video player to test the video sequence, it extracts the 7th bit plane from the previous frame 'N-1' 220 and compares it on a pixel-by-pixel basis with the 6th bit plane from the current frame 'N' 225. Any points within the two bit planes that do not match up indicate tampering at those pixels within the tampered frame 'N' 225. The location of the tampered frame, i.e. whether the tamper occurred in the current frame or previous frame, can also be found using the method illustrated in FIG. 3.

As an example, consider the un-tampered sequence 250. Comparison of the 7th bit plane of the previous frame with the 6th bit plane of the current frame would reveal no differences, to the bit plane content, on a pixel-by-pixel basis. However, in the tampered sequence 210, if the 6th bit plane of the current frame 'N' 225 does not exactly match the 7th bit plane of the previous frame 'N-1' 220, for some of the pixels in frame 'N' 225 of a sequence, then we know tampering has occurred. This could be in frame 'N' 225 or frame 'N-1' 220. In this case, a further test is performed.

The 7th bit plane of frame 'N' 225 is compared with the 6th bit plane of frame 'N+1' 230 for those pixels believed to have been tampered. If the bit planes for those pixels between those frames are equal, then the tampering is known to have occurred in frame 'N-1' 220. If the bit planes for those pixels between those frames are not equal, then the tampering is known to have occurred in frame 'N' 225.

By utilising the least significant bits or bit planes of a video/image transmission in this manner, an effective means of watermark embedding and tamper detection has been provided.

Referring now to FIG. 3, a flowchart 300 of a decision process for determining whether tampering has occurred is illustrated. As mentioned, a bit-wise comparison of the 6^{th} bit plane of the current frame is made with the 7^{th} bit plane of the previous frame, as in step 302. If the comparison yields a match, namely the bit planes are equal in step 304, the next pixel is selected, as shown in step 306.

If the comparison does not yield a match, namely the bit planes are not equal in step 304, a second bit-wise comparison is made, of the 7^{th} bit plane of the current frame with the 6^{th} bit plane of the next frame, as in step 308.

If the second comparison yields a match, namely the bit planes are equal in step 310, a decision is made that tampering of this pixel occurred in the previous 'N-1' frame, as shown in step 314. If the comparison does not yield a match, namely the bit planes are not equal in step 310, a decision is made that tampering of this pixel occurred in the current 'N' frame, as shown in step 312.

Furthermore, if an area is detected as having been altered, for example by intentional tampering, it is within the contemplation of the invention that the area is visually labelled, as in step 316, to inform a user viewing the video of such tampering. The visual labelling may take any form appropriate to make clear that tampering has occurred, which may include one or any combination of the following techniques:
(i) replacing any or all of the tampered image pixels with a known value. The known value is preferably selected to be sufficiently different from the source image content such that the tampering is clearly visible, for example black, white, any saturated colour, any non-natural colour;
(ii) altering only the coloured appearance of a tampered pixel such that the underlying image content remains visible but the tampering is clearly marked;
(iii) replacing only one component of a tampered pixel with a known value, for example 0 or 255, in an image format comprising more than one component;
(iv) visually labelling (using one or more of (i) or (ii) or (iii) above) the complete image frame within which any of the pixels are detected as having been tampered with and/or;
(v) visually labelling (using one or more of (i) or (ii) or (iii) above) the complete image frame, and all subsequent images in the video sequence, within and following an image frame in which any of the pixels are detected as having been tampered with.

Examples of 'watermarking' communication units suitable for incorporating the aforementioned inventive concepts are described in filed UK patent applications GB9914384.4 and GB0031085.4, to the present applicant.

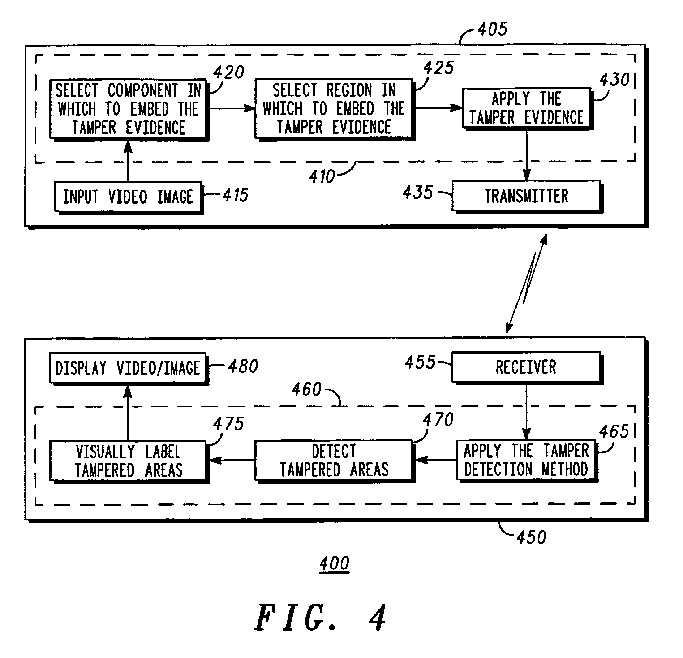

However, FIG. 4 describes a preferred configuration of video/image communication units to implement the preferred embodiment of the present invention. Referring now to FIG. 4, a video communication system 400 is shown, in accordance with the preferred embodiment of the invention. The video communication system 400 includes a transmitting video/image communication unit 405 for embedding a watermark, and a receiving video/image communication unit 450 for detecting a watermark.

The transmitting video/image communication unit 405, includes a video/image input port 415 for receiving video/image signals. A video/image signal is passed to processor 410, which includes three watermark-embedding processes.

A first selection function/algorithm 420 selects the component in which to embed the tamper evidence.
A second selection function/algorithm 425 then selects the region of the video/image in which to embed the tamper evidence. The tamper evidence is then applied in function/algorithm 430, in accordance with the method described with respect to FIG. 1 and FIG. 2. The video signal is then transmitted from transmitter 435 to the receiving video/image communication unit 450.

It is within the contemplation of the invention that alternative forms of moving video or image data may be used, for example 'transmission' may take the form of copying onto video tape, sending as an internet file, copying onto a floppy disk etc.

The receiving video/image communication unit 450, includes a receiver 455 for receiving video/image signals. A received watermarked video/image signal is passed to processor 460, which includes three watermark processes.

A first function/algorithm 465 applies the tamper evidence, in accordance with the method described with respect to FIG. 1 and FIG. 2. A second tamper detection function/algorithm 470 then detects whether tampering occurred, in accordance with the method described with respect to FIG. 3. If tampering is detected, the video/image signal is passed to a third visually labelling function/algorithm 475, to label the tampered areas, prior to passing the tampered signal to a display 480.

A benefit of the aforementioned inventive concepts is that they can be readily implemented in existing video communication units. More generally, the set of algorithms used to effect the image frame/5^{th} bit plane manipulation and processing may be implemented in a respective communication unit in any suitable manner. For example, new apparatus may be added to a conventional communication unit.

Alternatively existing parts of a conventional communication unit may be adapted, for example by reprogramming one or more processors 410, 460 therein. As such the required adaptation may be implemented in the form of processor-implementable instructions stored on a storage medium, such as a floppy disk, hard disk, programmable read only memory (PROM), random access memory (RAM) or any combination of these or other storage multimedia.

It will be understood that the video transmission and watermarking arrangements described above provide at least the following advantages:
(i) means for submission of video evidence to a court of law for which it may be shown that the video has not been tampered with since initial acquisition and storage;
(ii) means for purchasers of video and image material to authenticate the material such that it has not been altered since initial acquisition and storage;
(iii) means for distributors of video and image material to verify that material passed to them for distribution is genuine and has not been tampered with since initial acquisition and storage; and
(iv) means for fraudulent tampering of images and video to be detected, and the location of such tampering to be revealed to users of the material.

In summary, a video communication unit comprising a video input for receiving a video or image signal transmission has been described. The video or image signal includes a number of video or image frames, wherein each video or image frame includes a number of bit planes. The video input is operably coupled to a processor that replicates at least one bit plane in at least two received video or image frames to provide a means of tamper detection of the video or image signal transmission.

In addition, or in the alternative, a video communication unit has been described, for example the above video communication unit, that includes a video receiver for receiving, from a transmitting video communication unit, a watermarked video signal transmission. The watermarked video signal transmission has a number of video or image frames, wherein each video or image frame includes a number of bit planes. The receiver is operably coupled to a processor that compares at least one bit plane of at least two subsequent video or image frames to detect any tampering of the watermark.

In addition, or in the alternative, a video communication unit, for example either of the above video communication units, has been described that includes a processor that detects tampering of an area of an image of a received video or image transmission. The processor visually labels, upon detection of said tampering, said area to inform a user viewing the image or video of said tampering of said video or image transmission. In such a case, it is not essential that the aforementioned method of tamper detection be used.

In the preferred embodiment of the invention, a mobile radio device may incorporate any of the above video communication units. The mobile radio device may be a mobile phone, a portable or mobile PMR radio, a personal digital assistant, a laptop computer or a wirelessly networked PC. Further, a video transmission system adapted to use any of the above video communication units has been provided.

A method of watermarking a video signal transmission in a video transmission system has also been described. The method includes the steps of receiving a video or image signal transmission that has a number of video or image frames, wherein each video or image frame includes a number of bit planes. The method also includes the step of replicating at least one bit plane in a video or image frame to provide a means of tamper detection of the video or image signal transmission.

Thus, a method of embedding a watermark in a video sequence has been described that should be sufficient for evidentiary purposes of tampering, thereby improving upon the disadvantages with prior art arrangements.

In addition, or in the alternative, a method of detecting tampering of a watermarked image, has been described. The method includes the steps of receiving a watermarked image that has a number of video or image frames, wherein each video or image frame includes a number of bit planes, at least one of which is watermarked. The method also includes the steps of extracting said watermarked bit plane from a previous frame; and comparing said at least one watermarked bit plane in at least two subsequent video or image frames to detect any tampering.

In addition, or in the alternative, a method of visually labelling a video or image transmission has also been described. The method includes the step of altering a coloured appearance of a tampered pixel to inform a user viewing the video or image transmission of said tampering of said video or image transmission. Again, in such a case, it is not essential that the aforementioned method of tamper detection be used.

In such a manner, the labelling method allows areas of a video sequence to be highlighted that are detected as having been tampered with.

## Claims

1. A video communication unit (405) comprising a video input (415) for receiving a video or image signal transmission having a number of video or image frames, wherein each video or image frame (110, 120) includes a number of bit planes (130-150), the video input (415) being operably coupled to a processor (410), the video communication unit (405) **characterised by** said processor replicating at least one bit plane (140) of a received video or image frame in a subsequently received video or image frame to provide a means of tamper detection of the video or image signal transmission.

2. The video communication unit according to claim 1, wherein replication of at least one bit plane (140) in subsequent video or image frames is made in consecutive video or image frames.

3. The video communication unit according to claim 1 or claim 2, wherein replication of at least one bit plane (140) includes replicating a less significant bit plane of a previous frame in a more significant bit plane (150) of a current frame.

4. The video communication unit according to any preceding claim, wherein replication of at least one bit plane (140) is repeated throughout the video or image signal transmission.

5. The video communication unit according to any preceding claim, wherein replication of at least one bit plane (140) includes replication of a subset of pixels within a frame.

6. A video communication unit (450), comprising a video receiver (455) adapted for receiving, from a transmitting video communication unit (405) according to any preceding claim, a watermarked video signal transmission having a number of video or image frames (110, 120), wherein each video or image frame includes a number of bit planes (140, 150), the receiver being operably coupled to a processor (460), the video communication unit (450) **characterised by** said processor (460) comparing at least one bit plane (140) of at least two subsequent video or image frames to detect any tampering of the watermark.

7. The video communication unit (450) according to claim 6, further **characterised by** said processor (460) locating a spatial and temporal position of the tampering as the video signal is being played by the video communication unit.

8. The video communication unit (450) according to claim 7, further **characterised by** said processor determining a frame position of the tampered frame (225) by comparing an appropriate bit plane of a current frame to an expected matching bit plane of a previous frame (302), wherein:
if said comparison shows equal bit planes (304), no tampering has occurred; or
if said comparison shows unequal bit planes, a further comparison (308) is made between the current frame and the next frame such that:
if said comparison shows equal bit planes (310) the tampering occurred in the previous frame (314); or
if said comparison shows unequal bit planes, the tampering occurred in the current frame (312).

9. A video communication unit (450) according to any of claims 6 to 8, the video communication unit comprising a processor (460) that detects tampering of an area of an image, the video communication unit **characterised by** said processor (460) visually labelling (475), upon detection of said tampering, said area to inform a user viewing the image or video of said tampering.

10. The video communication unit (450) according to claim 9, wherein said visual labelling (475) includes replacing any or all of said tampered image or video with a known value such that said tampering is visible, for example black, white, any saturated colour, and/or any non-natural colour.

11. The video communication unit (450) according to claim 9, wherein said visual labelling (475) includes altering only a coloured appearance of a tampered pixel such that an underlying image content remains visible but said tampered area is marked.

12. The video communication unit (450) according to claim 9, wherein said visual labelling (475) includes replacing one component of a tampered pixel with a known value in an image format comprising more than one component.

13. The video communication unit (450) according to any of claims 9 to 12, wherein a complete frame is visually labelled (475) when any pixel within said frame is detected as having been tampered with.

14. The video communication unit (450) according to claim 13, wherein said complete frame and all subsequent frames in a video sequence within and following a frame in which any pixel is detected as having been tampered with are visually labelled.

15. The video communication unit (405, 450) according to any preceding claim, wherein the watermark is applied to at least one of the following image formats: YCbCr, RGB, or any single component of an image format.

16. The video communication unit (405, 450) according to any preceding claim wherein a watermark is applied in a restricted area or region of an image, or throughout the entire image.

17. A video transmission system (400) comprising a video communication unit (405, 450) in accordance with any of claims 1 to 16.

18. A mobile radio device comprising a video communication unit (405, 450) in accordance with any of claims 1 to 16.

19. The mobile radio device of claim 18, wherein the mobile radio device is a mobile phone, a portable or mobile PMR radio, a personal digital assistant, a lap-top computer or a wirelessly networked PC.

20. A method of watermarking a video signal transmission in a video transmission system, the method comprising the step of:
receiving (415) a video or image signal transmission having a number of video or image frames (110, 120), wherein each video or image frame includes a number of bit planes (140, 150);
the method **characterised by** the step of:
replicating at least one bit plane (140) of a received video or image frame in a subsequent video or image frame to provide a means of tamper detection of the video or image signal transmission.

21. A method of watermarking a video signal transmission according to claim 20, wherein the step of replicating includes replicating at least one bit plane (140) in a subsequent consecutive video or image frame.

22. A method of watermarking a video signal transmission according to claim 21, wherein the step of replicating includes replicating a less significant bit plane (140) of a previous frame (110) to a more significant bit plane (150) of a current frame.

23. The method of watermarking a video signal transmission according to any of claims 20 to 22, wherein the step of replicating is repeated throughout the video or image signal transmission.

24. The method of watermarking a video signal transmission according to any of claims 20 to 23, wherein the step of replicating includes replicating a subset of pixels within a frame.

25. A method of detecting tampering of a watermarked image, the method comprising the step of receiving (455) a watermarked image having a number of video or image frames (110, 120), wherein each video or image frame includes a number of bit planes (140, 150), at least one of which is watermarked in accordance with the method of any of claims 20-24, the method **characterised by** the steps of:
extracting (465) said watermarked bit plane (140) from a previous frame (110); and
comparing said at least one watermarked bit plane (140) in at least two subsequent video or image frames to detect any tampering of the watermark (470).

26. The method of detecting tampering of a watermarked image according to claim 25, wherein the step of comparing includes comparing a bit plane on a previous frame with a different bit plane on the current frame (302) on a pixel-by-pixel basis.

27. The method of detecting tampering of a watermarked image according to claim 25 or claim 26, the method further **characterised by** the steps of:
determining a frame position of the tampered frame by comparing an appropriate bit plane of the current frame to an expected matching bit plane of the previous frame, wherein:
if said comparison shows equal bit planes (304), no tampering has occurred; or
if said comparison shows unequal bit planes (304), the method is further **characterised by** the step of:
making a further comparison (308) between the current frame and the next frame such that:
if said comparison shows equal bit planes (310) the tampering occurred in the previous frame (314); or
if said comparison shows unequal bit planes (310), the tampering occurred in the current frame (312).

28. The method of detecting tampering of a watermarked image according to any of claims 25 to 27, the method further comprising the steps of:
(i) detecting tampering (470) of an area of an image of a received image or video transmission; and
(ii) visually labelling (475) said area to inform a user viewing the video of said tampering of said received image or video transmission.

29. The method of detecting tampering of a watermarked image according to claim 28, the method further **characterised by** the step of:
altering a coloured appearance of a tampered pixel to inform a user viewing the video or image transmission of said tampering.

30. The method of detecting tampering of a watermarked image according to claim 29, wherein said visually labelling (475) step includes the step of:
replacing any or all of a tampered image with a known value such that tampering is visible, for example black, white, any saturated colour, and/or any non-natural colour.

31. The method of detecting tampering of a watermarked image according to claim 29, wherein said visually labelling (475) step includes the step of altering only a coloured appearance of a tampered pixel such that an underlying image content remains visible but the tampering is marked.

32. The method of detecting tampering of a watermarked image according to claim 29, wherein said visually labelling (475) step includes the step of:
replacing one component of a tampered pixel with a known value in an image format comprising more than one component.

33. The method of detecting tampering of a watermarked image according to any of claims 29 to 32, wherein said visually labelling (475) step includes the step of:
visually labelling a complete image frame within which any pixel is detected as having been tampered with.

34. A storage medium having stored thereon processor-implementable instructions for controlling one or more processors (410, 460) to carry out the method of any of claims 20 to 33.

## Patentansprüche

1. Videokommunikationseinheit (405), welche einen Videoeingang (415) für den Empfang einer Video- oder Bildsignalübertragung mit einer Reihe von Video-Frames oder Bild-Frames aufweist,
wobei jeder Video- oder Bild-Frame (110, 120) eine Reihe von Bit-Schichten (130-150) aufweist, wobei der Videoeingang (415) betriebsbereit mit einem Prozessor (410) gekoppelt ist, wobei die Videokommunikationseinheit (405) **dadurch gekennzeichnet ist, dass** der Prozessor mindestens eine Bit-Schicht (140) eines empfangenen Video- oder Bild-Frames in einen nachfolgend empfangenen Video- oder Bild-Frame kopiert, um eine Vorrichtung zur Manipulationsdetektion der Video- oder Bildsignalübertragung bereitzustellen.

2. Bildkommunikationseinheit nach Anspruch 1, wobei das Kopieren mindestens einer Bit-Schicht (140) in nachfolgende Video- oder Bild-Frames in fortlaufenden Video- oder Bild-Frames erfolgt.

3. Videokommunikationseinheit nach Anspruch 1 oder Anspruch 2, wobei das Kopieren mindestens einer Bit-Schicht (140) das Kopieren einer weniger signifikanten Bit-Schicht eines vorherigen Frames in eine signifikantere Bit-Schicht (150) eines augenblicklichen Frames einschließt.

4. Videokommunikationseinheit nach einem der vorhergehenden Ansprüche, wobei das Kopieren mindestens einer Bit-Schicht (140) während der gesamten Video- oder Bildsignalübertragung wiederholt wird.

5. Videokommunikationseinheit nach einem der vorhergehenden Ansprüche, wobei das Kopieren mindestens einer Bit-Schicht (140) das Kopieren einer Teilmenge von Pixeln innerhalb eines Frames einschließt.

6. Videokommunikationseinheit (450), welche einen Videoempfänger (455) aufweist, welcher so ausgelegt ist, dass er von einer übertragenden Videokommunikationseinheit (405) gemäß einem der vorherigen Ansprüche eine mit einem Wasserzeichen versehene Videosignalübertragung empfängt, wobei diese eine Reihe von Video- oder Bild-Frames (110, 120) aufweist, wobei jeder Video- oder Bild-Frame eine Reihe von Bit-Schichten (140, 150) einschließt, wobei der Empfänger betriebsbereit mit einem Prozessor (460) verbunden ist, wobei die Videokommunikationseinheit (450) **dadurch gekennzeichnet ist, dass** der Prozessor (460) zumindest eine Bit-Schicht (140) mindestens zweier aufeinanderfolgender Video- oder Bild-Frames zur Detektion jeglicher Manipulation des Wasserzeichens vergleicht.

7. Videokommunikationseinheit (450) nach Anspruch 6, welche weiter **dadurch gekennzeichnet ist, dass** der Prozessor (460) eine räumliche und zeitliche Position der Manipulation lokalisiert, wenn das Videosignal mit Hilfe der Videokommunikationseinheit ausgespielt wird.

8. Videokommunikationseinheit (450) nach Anspruch 7, welche weiter **dadurch gekennzeichnet ist, dass** der Prozessor die Frame-Position des manipulierten Frames (225) bestimmt, indem er eine geeignete Bit-Schicht eines augenblicklichen Frames mit einer erwarteten Anpassungs-Bit-Schicht eines vorherigen Frames (302) vergleicht, wobei:
in dem Fall, dass der Vergleich identische Bit-Schichten (304) zeigt, keine Manipulation stattgefunden hat; oder
in dem Fall, dass der Vergleich ungleiche Bit-Schichten zeigt, ein weiterer Vergleich (308) zwischen dem augenblicklichen Frame und dem nächsten Frame durchgeführt wird, so dass:
in dem Fall, dass der Vergleich identische Bit-Schichten (310) zeigt, die Manipulation in dem vorherigen Frame (314) stattgefunden hat; oder
in dem Fall, dass der Vergleich ungleiche Bit-Schichten zeigt, die Manipulation in dem augenblicklichen Frame (312) stattgefunden hat.

9. Videokommunikationseinheit (450) nach einem der Ansprüche 6 bis 8, wobei die Videokommunikationseinheit einen Prozessor (460) aufweist, der eine Manipulation eines Bereichs eines Bildes erfasst, wobei die Videokommunikationseinheit **dadurch gekennzeichnet ist, dass** der Prozessor (460) nach der Detektion der Manipulation diesen Bereich optisch kenntlich macht (475), um einen Betrachter des Bildes oder Videos über die Manipulation zu informieren.

10. Videokommunikationseinheit (450) nach Anspruch 9, wobei die optische Kennzeichnung (475) das Ersetzen eines beliebigen oder aller manipulierter Bilder oder Videos durch einen bekannten Wert einschließt, so dass die Manipulation sichtbar ist, beispielsweise schwarz, weiss, jede beliebige satte oder dunkle Farbe, und/oder jede beliebige nicht-natürliche Farbe.

11. Videokommunikationseinheit (450) nach Anspruch 9, wobei die optische Kennzeichnung (475) nur die Veränderung einer farblichen Erscheinung eines manipulierten Pixels aufweist, so dass ein darunterliegender Bildinhalt sichtbar bleibt, jedoch der manipulierte Bereich markiert ist.

12. Videokommunikationseinheit (450) nach Anspruch 9, wobei die optischen Kennzeichnung (475) das Ersetzen einer Komponente eines manipulierten Pixels durch einen bekannten Wert in einem Bildformat einschließt, welches mehr als eine Komponente aufweist.

13. Videokommunikationseinheit (450) nach einem der Ansprüche 9 bis 12, wobei ein vollständiges Frame optisch **gekennzeichnet** wird (475), wenn erfasst wird, dass irgendein Pixel in dem Frame manipuliert worden ist.

14. Videokommunikationseinheit (450) nach Anspruch 13, wobei der vollständige Frame und alle nachfolgenden Frames in einer Videosequenz in und im Anschluss an einen Frame, in welchem erfasst wird, dass irgendein Bildelement manipuliert worden ist, optisch **gekennzeichnet** werden.

15. Videokommunikationseinheit (405, 450) nach einem der vorhergehenden Ansprüche, wobei das Wasserzeichen in zumindest einem der nachfolgenden Bildformate angebracht wird: YCbCr, RGB oder jede beliebige einzelne Komponente eines Bildformats.

16. Videokommunikationseinheit (405, 450) nach einem der vorhergehenden Ansprüche, wobei ein Wasserzeichen in einem begrenzten Bereich oder einer Zone eines Bildes, oder auf dem gesamten Bild angebracht wird.

17. Videoübertragungssystem (400), welches eine Videokommunikationseinheit (405, 450) gemäß einem der Ansprüche 1 bis 16 aufweist.

18. Mobilfunkvorrichtung, welche eine Videokommunikationseinheit (405, 450) gemäß einem der Ansprüche 1 bis 16 aufweist.

19. Mobilfunkvorrichtung nach Anspruch 18, wobei die Mobilfunkvorrichtung ein Mobiltelefon, eine tragbare oder mobile private Funkeinrichtung, ein persönlicher digitaler Assistent, ein Aktentaschen-Computer oder ein drahtlos vernetzter Personalcomputer ist.

20. Verfahren zur Anbringung eines Wasserzeichens an einer Videosignalübertragung in einem Videoübertragungssystem, wobei das Verfahren die folgenden Schritte aufweist.
Empfangen (415) einer Video- oder Bildsignalübertragung, welche eine Reihe von Video- oder Bild-Frames (110, 120) aufweist, wobei jeder Video- oder Bild-Frame eine Reihe von Bit-Schichten (140, 150) aufweist;
wobei das Verfahren durch folgende Schritte **gekennzeichnet** ist:
Kopieren mindestens einer Bit-Schicht (140) eines empfangenen Video- oder Bild-Frames in einen nachfolgenden Video- oder Bild-Frame, um eine Vorrichtung zur Manipulationsdetektion der Video- oder Bildsignalübertragung bereitzustellen.

21. Verfahren zur Anbringung eines Wasserzeichens an einer Videosignalübertragung nach Anspruch 20, wobei der Kopierschritt das Kopieren mindestens einer Bit-Schicht (140) in einen nachfolgenden, fortlaufenden Video- oder Bild-Frame einschließt.

22. Verfahren zur Anbringung eines Wasserzeichens an einer Videosignalübertragung nach Anspruch 21, wobei der Kopierschritt das Kopieren einer weniger signifikanten Bit-Schicht (140) eines vorherigen Frames (110) zu einer signifikanteren Bit-Schicht (150) eines augenblicklichen Frames einschließt.

23. Verfahren zur Anbringung eines Wasserzeichens an einer Videosignalübertragung nach einem der Ansprüche 20 bis 22, wobei der Kopierschritt während der gesamten Video- oder Bildsignalübertragung wiederholt wird.

24. Verfahren zur Anbringung einer Videosignalübertragung nach einem der Ansprüche 20 bis 23, wobei der Kopierschritt das Kopieren einer Teilmenge von Pixeln innerhalb eines Frames einschließt.

25. Verfahren zur Detektion einer Manipulation eines Wasserzeichens, wobei das Verfahren den Schritt des Empfangs (455) eines mit einem Wasserzeichen versehenen Bildes, welches eine Reihe von Video- oder Bild-Frames (110, 120) aufweist, umfasst, wobei jeder Video- oder Bild-Frame eine Reihe von Bit-Schichten (140, 150) einschließt, von denen mindestens eine mit einem Wasserzeichen gemäß dem Verfahren nach einem der Ansprüche 20 bis 24 versehen ist, wobei das Verfahren durch die folgenden Schritte **gekennzeichnet** ist:
Extrahieren (465) der mit einem Wasserzeichen versehenen Bit-Schicht (140) aus einem vorherigen Frame (110); und
Vergleichen der mindestens einen mit einem Wasserzeichen versehenen Bit-Schicht (140) in mindestens zwei nachfolgenden Video- oder Bild-Frames, um jegliche Manipulation des Wasserzeichens (470) zu erfassen.

26. Verfahren zur Detektion einer Manipulation eines mit einem Wasserzeichen versehenen Bildes nach Anspruch 25, wobei der Vergleichsschritt das Vergleichen einer Bit-Schicht auf einem vorherigen Frame mit einer anderen Bit-Schicht auf dem augenblicklichen Frame (302) auf der Basis Pixel für Pixel vergleicht.

27. Verfahren zur Detektion einer Manipulation eines mit einem Wasserzeichen versehenen Bildes nach Anspruch 25 oder 26, wobei das Verfahren weiter durch die folgenden Schritte **gekennzeichnet** ist:
Bestimmen einer Frame-Position des manipulierten Frames durch Vergleich einer geeigneten Bit-Schicht des augenblicklichen Frames mit einer erwarteten Anpassungs-Bit-Schicht des vorherigen Frames, wobei:
in dem Fall, dass der Vergleich identische Bit-Schichten (304) zeigt, keine Manipulation stattgefunden hat; oder
in dem Fall, dass der Vergleich ungleiche Bit-Schichten (304) zeigt, das Verfahren weiter durch den folgenden Schritt **gekennzeichnet** ist:
Durchführen eines weiteren Vergleichs (308) zwischen dem augenblicklichen Frame und dem nächsten Frame, so dass:
in dem Fall, dass der Vergleich identische Bit-Schichten (310) zeigt, die Manipulation in dem vorherigen Frame (314) stattgefunden hat; oder
in dem Fall, dass der Vergleich ungleiche Bit-Schichten (310) zeigt, die Manipulation in dem augenblicklichen Frame (312) stattgefunden hat.

28. Verfahren zur Detektion einer Manipulation eines mit einem Wasserzeichen versehenen Bildes nach einem der Ansprüche 25 bis 27, wobei das Verfahren weiter die folgenden Schritte umfasst:
(i) Erfassung einer Manipulation (470) eines Bereichs eines Bildes einer empfangenen Bild- oder Videoübertragung; und
(ii) optische Kennzeichnung (475) dieses Bereichs, um einen Betrachter des Videos über die Manipulation der empfangenen Bild- oder Videoübertragung zu informieren.

29. Verfahren zur Detektion einer Manipulation eines mit einem Wasserzeichen versehenen Bildes nach Anspruch 28, wobei das Verfahren weiter durch den folgenden Schritt **gekennzeichnet** ist:
Ändern eines farblichen Erscheinungsbildes eines manipulierten Pixels, um einen Betrachter der Video- oder Bild- übertragung über die Manipulation zu informieren.

30. Verfahren zur Detektion einer Manipulation eines mit einem Wasserzeichen versehenen Bildes nach Anspruch 29, wobei der Schritt der optischen Kennzeichnung (475) den folgenden Schritt einschließt:
Ersetzen eines oder aller manipulierter Bilder durch einen bekannten Wert, so dass eine Manipulation sichtbar ist, beispielsweise schwarz, weiss, jede beliebige satte oder dunkle Farbe, und/oder jede beliebige nicht-natürliche Farbe.

31. Verfahren zur Detektion einer Manipulation eines mit einem Wasserzeichen versehenen Bildes nach Anspruch 29, wobei der Schritt der optische Kennzeichnung (475) den Schritt nur der Veränderung des farblichen Erscheinungsbildes eines manipulierten Pixels einschließt, so dass ein darunterliegender Bildinhalt sichtbar bleibt, die Manipulation jedoch markiert ist.

32. Verfahren zur Detektion einer Manipulation eines mit einem Wasserzeichen versehenen Bildes nach Anspruch 29, wobei die optische Kennzeichnung (475) den folgenden Schritt einschließt:
Ersetzen einer Komponente eines manipulierten Pixels durch einen bekannten Wert in einem Bildformat, das mehr als eine Komponente aufweist.

33. Verfahren zur Detektion einer Manipulation eines mit einem Wasserzeichen versehenen Bildes nach einem der Ansprüche 29 bis 32, wobei der Schritt der optischen Kennzeichnung (475) den folgenden Schritt einschließt:
Optisches Kennzeichnen eines vollständigen Bild-Frames, in welchem irgendein Pixel erfasst wird, welches manipuliert worden ist.

34. Speichermedium, welches in einen Prozessor implementierbare Instruktionen zur Steuerung eines oder mehrerer Prozessoren (410, 460) speichert, um das Verfahren nach einem der Ansprüche 20 bis 33 auszuführen.

## Revendications

1. Unité de transmission d'images (405) comprenant une entrée vidéo (415) pour recevoir une transmission de signal de vidéo ou d'image ayant une pluralité de trames d'image ou de vidéo, dans laquelle chaque trame d'image ou de vidéo (110, 120) comprend une pluralité de plans de bits (130-150), l'entrée vidéo (415) étant couplée fonctionnellement à un processeur (410), l'unité de transmission d'images (405) étant **caractérisée en ce que** ledit processeur reproduit au moins un plan de bits (140) d'une trame d'image ou de vidéo reçue dans une trame d'image ou de vidéo reçue successivement pour fournir un moyen de détection de violation de la transmission de signal de vidéo ou d'image.

2. Unité de transmission d'images selon la revendication 1, dans laquelle la reproduction d'au moins un plan de bits (140) dans des trames d'image ou de vidéo successives est effectuée dans des trames d'image ou de vidéo consécutives.

3. Unité de transmission d'images selon la revendication 1 ou 2, dans laquelle la reproduction d'au moins un plan de bits (140) comprend la reproduction d'un plan de bits moins significatif d'une trame précédente dans un plan de bits plus significatif (150) d'une trame actuelle.

4. Unité de transmission d'images selon l'une quelconque des revendications précédentes, dans laquelle la reproduction d'au moins un plan de bits (140) est répétée tout au long de la transmission de signal de vidéo ou d'image.

5. Unité de transmission d'images (450), comprenant la reproduction d'au moins un plan de bits (140) comprend la reproduction d'un sous-ensemble de pixels dans une trame.

6. Unité de transmission d'images (450), comprenant un récepteur vidéo (455) adapté pour recevoir, à partie d'une unité de transmission d'images émettrice (405) selon l'une quelconque des revendications précédentes, une transmission de signal vidéo à filigrane ayant une pluralité de trames d'image ou de vidéo (110, 120), dans laquelle chaque trame d'image ou de vidéo (110, 120) comprend une pluralité de plans de bits (140, 150), le récepteur étant couplé fonctionnellement à un processeur (460), l'unité de transmission d'images (450) étant **caractérisée en ce que** ledit processeur (460) compare au moins un plan de bits (140) d'au moins deux trames d'image ou de vidéo successives pour détecter toute violation du filigrane.

7. Unité de transmission d'images (450) selon la revendication 7, **caractérisée en outre en ce que** ledit processeur (460) localise une position spatiale et temporelle de la violation lorsque le signal vidéo est reproduit par l'unité de transmission d'images.

8. Unité de transmission d'images (450) selon la revendication 7, **caractérisée en outre en ce que** ledit processeur détermine une position de trame de la trame violée (225) en comparant un plan de bits approprié d'une trame actuelle à un plan de bits correspondant prévu d'une trame précédente (302), dans laquelle:
si ladite comparaison montre des plans de bits égaux (304), aucune violation ne s'est produite; ou
si ladite comparaison montre des plans de bits inégaux, une comparaison ultérieure (308) est effectuée entre la trame actuelle et la trame suivante de manière que:
si ladite comparaison montre des plans de bits égaux (310), la violation s'est produite dans la trame précédente (314); ou
si ladite comparaison montre des plans de bits inégaux, la violation s'est produite dans la trame actuelle (312).

9. Unité de transmission d'images (450) selon l'une quelconque des revendications 6 à 8, l'unité de transmission d'images comprenant un processeur (460) qui détecte la violation d'une zone d'une image, l'unité de transmission d'images étant **caractérisée en ce que** ledit processeur (460) marque visuellement (475), à la détection de ladite violation, ladite zone pour informer l'utilisateur visualisant l'image ou vidéo de ladite violation.

10. Unité de transmission d'images (450) selon la revendication 9, dans laquelle ledit marquage visuel (475) comprend le remplacement de tout ou partie de ladite image ou vidéo violée avec une valeur connue de manière que ladite violation soit visible, par exemple noire, blanche, n'importe quelle couleur saturée et/ou n'importe quelle couleur non naturelle.

11. Unité de transmission d'images (450) selon la revendication 9, dans laquelle ledit marquage visuel (475) comprend l'altération seulement d'un aspect de couleur d'un pixel violé de manière qu'un contenu d'image sous-jacent reste visible mais que ladite zone violée soit marquée.

12. Unité de transmission d'images (450) selon la revendication 9, dans laquelle ledit marquage visuel (475) comprend le remplacement d'une composante d'un pixel violé par une valeur connue dans un format d'image comprenant plus d'une composante.

13. Unité de transmission d'images (450) selon l'une quelconque des revendications 9 à 12, dans laquelle une trame complète est marquée visuellement (475) quand un quelconque pixel de ladite trame est détecté comme ayant été violé.

14. Unité de transmission d'images (450) selon la revendication 13, dans laquelle ladite trame complète et toutes les trames successives, dans une séquence vidéo dans ou suivant une trame dans laquelle un quelconque pixel est détecté comme ayant été violé, sont marquées visuellement.

15. Unité de transmission d'images (450) selon l'une quelconque des revendications précédentes, dans laquelle le filigrane est appliqué à au moins un des formats d'image suivants: YCbCr, RGB ou n'importe quelle composante simple d'un format d'image.

16. Unité de transmission d'images (450) selon l'une quelconque des revendications précédentes, dans laquelle un filigrane est appliqué dans une zone ou région restreinte d'une image ou dans l'image toute entière.

17. Système de transmission d'images (400) comprenant une unité de transmission d'images (405, 450) selon l'une quelconque des revendications 1 à 16.

18. Dispositif de radiocommunication mobile comprenant une unité de transmission d'images (405, 450) selon l'une quelconque des revendications 1 à 16.

19. Dispositif de radiocommunication mobile selon la revendication 18, dans lequel le dispositif de radiocommunication mobile est un téléphone mobile, une radio PMR portable ou mobile, un assistant numérique personnel, un ordinateur portatif ou un ordinateur personnel mis en réseau sans fil.

20. Procédé pour filigraner une transmission de signal vidéo dans un système de transmission d'images, le procédé comprenant l'étape consistant à:
recevoir (415) une transmission de signal de vidéo ou d'images ayant une pluralité de trames d'image ou de vidéo (110, 120), où chaque trame d'image ou de vidéo comprend une pluralité de plans de bits (140, 150);
le procédé étant **caractérisé par** l'étape consistant à:
reproduire au moins un plan de bits (140) d'une trame d'image ou de vidéo reçue dans une trame d'image ou de vidéo successive pour fournir un moyen de détection de violation de la transmission de signal de vidéo ou d'image.

21. Procédé pour filigraner une transmission de signal vidéo selon la revendication 20, dans lequel l'étape de reproduction consiste à reproduire au moins un plan de bits (140) dans une trame d'image ou de vidéo consécutive successive.

22. Procédé pour filigraner une transmission de signal vidéo selon la revendication 21, dans lequel l'étape de reproduction consiste à reproduire un plan de bits (140) moins significatif d'une trame précédente (110) dans un plan de bits plus significatif (150) d'une trame actuelle.

23. Procédé pour filigraner une transmission de signal vidéo selon l'une quelconque des revendications 20 à 22, dans lequel l'étape de reproduction est répétée tout au long de la transmission de signal de vidéo ou d'image.

24. Procédé pour filigraner une transmission de signal vidéo selon l'une quelconque des revendications 20 à 23, dans lequel l'étape de reproduction comprend la reproduction d'un sous-ensemble de pixels dans une trame.

25. Procédé pour détecter une violation d'une image à filigrane, le procédé comprenant l'étape consistant à recevoir (455) une image à filigrane ayant une pluralité de trames d'image ou de vidéo (110, 120), où chaque trame d'image ou de vidéo comprend une pluralité de plans de bits (140, 150), dont au moins un est filigrané suivant le procédé selon l'une quelconque des revendications 20 à 24, le procédé étant **caractérisé par** les étapes consistant à:
extraire (465) ledit plan de bits filigrané (140) d'une trame précédente (110); et
comparer ledit au moins un plan de bits filigrané (140) dans au moins deux trames d'image ou de vidéo pour détecter une quelconque violation du filigrane (470).

26. Procédé pour détecter une violation d'une image à filigrane selon la revendication 25, dans lequel l'étape de comparaison consiste à comparer un plan de bits sur une trame précédente avec un plan de bits différent sur une trame actuelle (302) sur une base de pixel par pixel.

27. Procédé pour détecter une violation d'une image à filigrane selon la revendication 25 ou 26, le procédé étant **caractérisé en outre par** les étapes consistant à:
déterminer une position de trame de la trame violée en comparant un plan de bits approprié d'une trame actuelle à un plan de bits correspondant prévu de la trame précédente, dans lequel:
si ladite comparaison montre des plans de bits égaux (304), aucune violation ne s'est produite; ou
si ladite comparaison montre des plans de bits inégaux (304), le procédé est **caractérisé en outre par** l'étape consistant à:
effectuer une comparaison ultérieure (308) entre la trame actuelle et la trame suivante de manière que:
si ladite comparaison montre des plans de bits égaux (310), la violation s'est produite dans la trame précédente (314); ou
si ladite comparaison montre des plans de bits inégaux (310), la violation s'est produite dans la trame actuelle (312).

28. Procédé pour détecter une violation d'une image à filigrane selon l'une quelconque des revendications 25 à 27, le procédé comprenant en outre les étapes consistant à:
(i) détecter la violation (470) d'une zone d'une image d'une transmission d'image ou de vidéo reçue; et
(ii) marquer visuellement (475) ladite zone pour informer un utilisateur visualisant la vidéo de ladite violation de ladite transmission d'image ou de vidéo reçue.

29. Procédé pour détecter une violation d'une image à filigrane selon la revendication 28, le procédé étant **caractérisé en outre par** l'étape consistant à:
altérer un aspect de couleur d'un pixel violé de manière à informer un utilisateur visualisant ladite transmission d'image ou de vidéo de ladite violation.

30. Procédé pour détecter une violation d'une image à filigrane selon la revendication 29, dans lequel ladite étape de marquage visuel (475) comprend l'étape consistant à:
remplacer tout ou partie d'une image violée avec une valeur connue telle que la violation soit visible, par exemple noire, blanche, n'importe quelle couleur saturée et/ou n'importe quelle couleur non naturelle.

31. Procédé pour détecter une violation d'une image à filigrane selon la revendication 29, dans lequel ladite étape de marquage visuel (475) comprend l'étape consistant à altérer seulement d'un aspect de couleur d'un pixel violé de manière qu'un contenu d'image sous-jacent reste visible mais que ladite zone violée soit marquée.

32. Procédé pour détecter une violation d'une image à filigrane selon la revendication 29, dans lequel ladite étape de marquage visuel (475) comprend l'étape consistant à:
remplacer une composante d'un pixel violé par une valeur connue dans un format d'image comprenant plus d'une composante.

33. Procédé pour détecter une violation d'une image à filigrane selon l'une quelconque des revendications 29 à 32, dans lequel ladite étape de marquage visuel (475) comprend l'étape consistant à:
marquer visuellement une trame d'image complète dans laquelle un quelconque pixel est détecté comme ayant été violé.

34. Support de mémoire ayant mémorisé sur celui-ci des instructions exploitables par processeur pour commander un ou plusieurs processeurs (410, 460) pour exécuter le procédé selon l'une quelconque des revendications 20 à 33.
